(19) Europäisches Patentamt
European Patent Office
Office européen des brevets

(11) **EP 4 484 495 A1**

(12) **EUROPEAN PATENT APPLICATION**
published in accordance with Art. 153(4) EPC

(43) Date of publication:
**01.01.2025 Bulletin 2025/01**

(21) Application number: **22928853.5**

(22) Date of filing: **26.10.2022**

(51) International Patent Classification (IPC):
**C08L 23/20** (2006.01)   **C08J 5/00** (2006.01)
**F16L 11/04** (2006.01)

(52) Cooperative Patent Classification (CPC):
**C08J 5/00; C08L 23/20; F16L 11/04**

(86) International application number:
**PCT/JP2022/039876**

(87) International publication number:
**WO 2023/162335 (31.08.2023 Gazette 2023/35)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **22.02.2022 JP 2022026057**

(71) Applicant: **Mitsui Chemicals, Inc.
Tokyo 104-0028 (JP)**

(72) Inventors:
• **UEKUSA, Takayuki
Ichihara-shi, Chiba 299-0108 (JP)**
• **YASUI, Motoyasu
Sodegaura-shi, Chiba 299-0265 (JP)**
• **FUKAGAWA, Yoshisada
Sodegaura-shi, Chiba 299-0265 (JP)**

(74) Representative: **Hoffmann Eitle
Patent- und Rechtsanwälte PartmbB
Arabellastraße 30
81925 München (DE)**

(54) **4-METHYL-1-PENTENE COPOLYMER COMPOSITION AND METHOD FOR MANUFACTURING MOLDED BODY, MANDREL, AND RUBBER HOSE**

(57)     A 4-methyl-1-pentene copolymer composition (X), including 50 to 90 parts by mass of a 4-methyl-1-pentene-based polymer (A) having a melting point in a range of 200 to 250°C as measured by DSC, 5 to 30 parts by mass of a 4-methyl-1-pentene-based polymer (B) having a melting point of lower than 200°C or having no melting point observed as measured by DSC, and 5 to 30 parts by mass of a thermoplastic elastomer (C) other than the (A) and the (B), and satisfying the following requirements (a) and (b), a molded body composed of the composition (X), and a method for producing a rubber hose. Requirement (a): the tan δ peak temperature determined by dynamic viscoelasticity measurement in a temperature range of 0 to 240°C at a frequency of 10 rad/s is 0 to 60°C; and requirement (b): the tan δ peak value determined by dynamic viscoelasticity measurement in a temperature range of 0 to 100°C at a frequency of 10 rad/s is 0.15 to 0.8.

**EP 4 484 495 A1**

## Description

Technical Field

The present invention relates to a 4-methyl-1-pentene copolymer composition, a molded body, a mandrel, and a method for producing a rubber hose.

Background Art

4-Methyl-1-pentene-based polymers composed of 4-methyl-1-pentene as a main constituent monomer have been widely used in various applications because of their excellent mold releasability, heat resistance, water resistance, and solvent resistance. The 4-methyl-1-pentene-based polymers are used, for example, as a FPC (Flexible Printed Circuits) mold releasing film and a mold releasing film for composite material molding by taking advantage of their high melting points and favorable mold releasability, and molded bodies of 4-methyl-1-pentene-based polymers are used for laboratory instrument applications and mandrels, for example, by making use of, for example, their chemical resistance and water resistance.

In recent years, as hydraulic hoses have increased in diameter accompanying upsizing and a higher output of construction machinery, mandrels for manufacturing have also become increasingly larger in diameter, resulting in arising problems in workability of mandrel and pullability upon molding processing as well as problems of breakage or chipping when bent because when the mandrel is stored in reel form, the molded body composed of 4-methyl-1-pentene-based polymer is rigid. For pullability of a mandrel, a technique for adjusting its surface roughness has been disclosed (for example, see Patent Literature 1).

The 4-methyl-1-pentene-based polymer is, on the other hand, used not only singly but also developed for its application as a composition with an elastomer. For example, in a mandrel, for the purpose of improving flexibility of the 4-methyl-1-pentene-based polymer, a resin composition in which a small amount of an olefinic elastomer or a liquid olefinic oligomer was added has been disclosed (see, for example, Patent Literatures 2 to 4). Moreover, in a heat-resistant protector for automotive cables (see, for example, Patent Literature 5) and an electric wire covering material (for example, Patent Literature 6), for the purpose of improving heat resistance of an olefinic elastomer, a resin composition in which a small amount of 4-methyl-1-pentene-based polymer was added has been disclosed. In these applications, the compositions are used in the vicinity of heating elements such as automobile engine compartments and electronic components, as a result of which their heat resistance and shape retention are required, and fracture resistance at low temperature is required in an environment for long-term use in winter.

Furthermore, a composition of two types of 4-methyl-1-pentene copolymers that satisfy specific conditions and a thermoplastic resin has also been disclosed, mainly for films and blow molded bodies (see, for example, Patent Literature 7) .

Citation List

Patent Literatures

[Patent Literature 1] JP5533519
[Patent Literature 2] JP2006-274119A
[Patent Literature 3] JPH11-269330A
[Patent Literature 4] JP2013-249387A
[Patent Literature 5] JP2010-235800A
[Patent Literature 6] JP2002-138173A
[Patent Literature 7] JP5769821

Summary of Invention

Technical Problem

However, in the resin compositions exemplified in Patent Literatures 1 to 3 and 7 described above, the 4-methyl-1-pentene-based polymer was studied singly, and the content of the 4-methyl-1-pentene polymer was large, and therefore, fracture resistance at low temperature is poor due to low-temperature brittleness derived from the 4-methyl-1-pentene-based polymer. Moreover, in the resin composition disclosed in Patent Literature 4, there is a concern that a liquid olefinic oligomer bleeds out, resulting in causing stickiness and deteriorating mold releasability upon repeated use. Moreover, since the resin compositions disclosed in Patent Literatures 5 and 6 also have a high content of olefinic elastomer, addition of a small amount of 4-methyl-1-pentene-based polymer does not significantly improve heat resistance and is poor in elevated temperature characteristics.

An object to be solved by one embodiment according to the present invention is to provide a 4-methyl-1-pentene copolymer composition capable of retaining its shape at elevated temperature and is excellent in toughness of a molded body to be obtained at low temperature. The other object to be solved by one embodiment according to the present invention is to provide a molded body capable of retaining its shape at elevated temperature and is excellent in toughness at low temperature.

Solution to Problem

An example of a specific means for solving the aforementioned problem is as follows.

<1> A 4-methyl-1-pentene copolymer composition (X), comprising

50 to 90 parts by mass of a 4-methyl-1-pentene-based polymer (A) having a melting point in a range of 200 to 250°C as measured by differential scanning calorimetry (DSC),
5 to 30 parts by mass of a 4-methyl-1-pentene-based polymer (B) having a melting point of lower than 200°C or having no melting point observed as measured by differential scanning calorimetry (DSC), and
5 to 30 parts by mass of a thermoplastic elastomer (C) other than the 4-methyl-1-pentene-based polymer (A) and the 4-methyl-1-pentene-based polymer (B), wherein the total amount of (A), (B), and (C) is 100 parts by mass, and satisfying the following requirements (a) and (b); requirement (a): a temperature at which a value of loss tangent $\tan \delta$ determined by dynamic viscoelasticity measurement at a frequency of 10 rad/s (1.6 Hz) in a temperature range of 0 to 240°C is maximum, is 0 to 60°C; and requirement (b): a maximum value of loss tangent $\tan \delta$ determined by dynamic viscoelasticity measurement at a frequency of 10 rad/s (1.6 Hz) in a temperature range of 0 to 100°C is 0.15 to 0.8.

<2> The 4-methyl-1-pentene copolymer composition (X) according to <1>, wherein the 4-methyl-1-pentene-based polymer (A) satisfies the following requirements (c) and (d) and the 4-methyl-1-pentene-based polymer (B) satisfies the following requirements (f) and (g); requirement (c): a constituent unit derived from 4-methyl-1-pentene is in a range of 100 to 90 mol%, and a constituent unit derived from at least one selected from the group consisting of ethylene and an $\alpha$-olefin having 10 to 20 carbon atoms is in a range of 0 to 10 mol%, provided that the total amount of the constituent unit derived from 4-methyl-1-pentene and the constituent units derived from ethylene and an $\alpha$-olefin having 10 to 20 carbon atoms is 100 mol%; requirement (d): a density is in a range of 820 to 850 kg/m³; requirement (f): the 4-methyl-1-pentene-based polymer (B) is composed of 55 to 97 mol% of a constituent unit (i) derived from 4-methyl-1-pentene and 3 to 45 mol% of a constituent unit (ii) derived from at least one selected from ethylene and an $\alpha$-olefin having 3 to 20 carbon atoms excluding 4-methyl-1-pentene, provided that a sum of the constituent unit (i) and the constituent unit (ii) is 100 mol%; and requirement (g): the $\tan \delta$ peak temperature determined by dynamic viscoelasticity measurement at a frequency of 10 rad/s (1.6 Hz) in a temperature range of -40 to 150°C is 15°C to 45°C; and requirement (h): a density is in a range of 830 to 870 kg/m³.

<3> The 4-methyl-1-pentene copolymer composition (X) according to <1> or <2>, wherein the thermoplastic elastomer (C) is an olefinic elastomer (C-1) or a styrenic elastomer (C-2) .

<4> A molded body formed of the 4-methyl-1-pentene copolymer composition (X) according to any one of <1> to <3>.

<5> A mandrel formed of the 4-methyl-1-pentene copolymer composition (X) according to any one of <1> to <4>.

<6> A method for producing a rubber hose, comprising:

a step of extruding the 4-methyl-1-pentene copolymer composition (X) according to any one of <1> to <4> to obtain a mandrel; and
a step of producing a rubber hose using the mandrel obtained in the step.

Advantageous Effects of Invention

According to one embodiment of the present invention, provided is a 4-methyl-1-pentene copolymer composition capable of retaining its shape at elevated temperature and being excellent in toughness of a molded body to be obtained at low temperature. According to one embodiment of the present invention, provided is a molded body capable of retaining its shape at elevated temperature and being excellent in toughness at low temperature.

Description of Embodiments

The contents of the present invention will be described in detail below. The contents of the constituent features described below may be described based on typical embodiments of the present invention, however, the present invention is not limited to such embodiments.

In the present description, "to" indicating a numerical range is used in the meaning of including the numerical values written before and after "to" as the lower limit value and the upper limit value, respectively.

In the present description, "to" indicating a numerical range means that the unit described either before or after "to" indicate the same unit unless otherwise specified.

In the present description, a combination of two or more preferred embodiments is a more preferred embodiment.

In the present description, the term "polymer" includes a homopolymer and a copolymer, unless otherwise specified.

The present invention will be described in detail below.

<4-Methyl-1-pentene copolymer composition (X)>

The 4-methyl-1-pentene copolymer composition (X) according to the present invention includes 50 to 90 parts by mass of a 4-methyl-1-pentene-based polymer (A) (hereinafter, also simply referred to as a "4-methyl-1-pentene-based polymer (A)") having a melting point (Tm) in a range of 200 to 250°C as measured by differential scanning calorimetry (DSC),

5 to 30 parts by mass of a 4-methyl-1-pentene-based polymer (B) (hereinafter, also simply referred to as a "4-methyl-1-pentene-based polymer (B)") having a melting point of lower than 200°C or having no melting point observed as measured by differential scanning calorimetry (DSC), and

5 to 30 parts by mass of a thermoplastic elastomer (C) other than the 4-methyl-1-pentene-based polymer (A) and the 4-methyl-1-pentene-based polymer (B) (wherein the total amount of (A), (B), and (C) is 100 parts by mass), and satisfies the following requirements (a) and (b).

The 4-methyl-1-pentene copolymer composition (X) according to the present invention has the aforementioned configuration, as a result of which a molded body to be obtained is excellent in flexibility at room temperature and toughness at low temperature while maintaining heat resistance. The reason for this is not clear, however, it is presumed as follows.

It is presumed that the 4-methyl-1-pentene copolymer composition (X) includes a 4-methyl-1-pentene-based polymer (A) and a 4-methyl-1-pentene-based polymer (B), having the different melting point from each other, thereby making it possible to soften the composition more effectively than other thermoplastic elastomers while maintaining heat resistance that is a characteristic of the 4-methyl-1-pentene-based polymer, and also to retain its shape at elevated temperature, and the composition has favorable dispersibility with an thermoplastic elastomer, resulting in being excellent in toughness at low temperature.

Furthermore, the molded body composed of the 4-methyl-1-pentene copolymer composition (X) of the present invention having the configuration described above, has appropriate elongation and hardness, and therefore, when a molded body is a mandrel, the mandrel does not deform and can also exhibit mold releasability when pulled out after production of rubber hose.

The 4-methyl-1-pentene copolymer composition (X) according to the present invention satisfies both the following requirements (a) and (b):

<<Requirement (a)>>

In the 4-methyl-1-pentene copolymer composition (X), the temperature at which the value of loss tangent tan $\delta$ determined by dynamic viscoelasticity measurement at a frequency of 10 rad/s (1.6 Hz) (hereinafter, also simply referred to as a "tan $\delta$ peak temperature") in a temperature range of 0 to 240°C is maximum, is 0 to 60°C.

Herein, the lower limit value of the $\delta$ peak temperature in the temperature range of 0 to 240°C is preferably 5°C or higher and more preferably 10°C or higher. The upper limit value of the tan $\delta$ peak temperature is preferably 55°C or lower, more preferably 50°C or lower, and particularly preferably 45°C or lower. The tan $\delta$ peak temperature in the temperature range of 0 to 240°C being within the above range, makes it possible for the molded body and mandrel obtained from the 4-methyl-1-pentene copolymer composition (X) to achieve their pullability and flexibility.

It is to be noted that details of a dynamic viscoelasticity measurement method are as will be described in Examples below.

<<Requirement (b)>>

In the 4-methyl-1-pentene copolymer composition (X), the maximum value of loss tangent tan $\delta$ determined by dynamic viscoelasticity measurement at a frequency of 10 rad/s (1.6 Hz) in a temperature range of 0 to 100°C (hereinafter, also simply referred to as a "tan $\delta$ peak value") is 0.15 to 0.8.

The tan $\delta$ peak value in the temperature range of 0 to 100°C within the above temperature range achieves flexible change for slow deformation such as bending, and hardening in response to rapid deformation of the mandrel resulted when the rubber hose is pulled out from the mandrel by hand or using compressed air, as a result of which easy pulling out can be attained.

From the above viewpoint, the lower limit value of the tan $\delta$ peak value in the temperature range of 0 to 100°C is preferably 0.16 or more and more preferably 0.20 or more. From the same viewpoint, the upper limit value of the tan $\delta$ peak value in the temperature range of 0 to 100°C is preferably 0.8 or less, more preferably 0.5 or less, and further preferably 0.4 or less.

The above tan $\delta$ peak temperature and tan $\delta$ peak value may be adjusted by compositions and the content of the 4-methyl-1-pentene-based polymer (A) and 4-methyl-1-pentene-based polymer (B), which will be described later.

The 4-methyl-1-pentene-based polymer (A), 4-methyl-1-pentene-based polymer (B), and thermoplastic elastomer (C) other than the 4-methyl-1-pentene-based polymer (A) and 4-methyl-1-pentene-based polymer (B) (hereinafter also simply referred to as "thermoplastic elastomer (C)"), which are each the constituent feature of the 4-methyl-1-pentene copolymer composition (X) according to the present invention, will be described below. They will be described in detail below.

<4-Methyl-1-pentene-based polymer (A)>

The 4-methyl-1-pentene-based polymer (A) having a melting point (Tm) in a range of 200 to 250°C as measured by differential scanning calorimetry (DSC), is not particularly limited as long as the melting point measured by differential scanning calorimetry (DSC) is in the range of 200 to 250°C, and it may be a homopolymer of 4-methyl-1-pentene, or a copolymer of 4-methyl-1-pentene and an $\alpha$-olefin other than 4-methyl-1-pentene.

The 4-methyl-1-pentene-based polymer (A) having a melting point of 200°C or higher as measured by differential scanning calorimetry (DSC) enables improving the strength of a molded body obtained using a resin composition including the 4-methyl-1-pentene-based polymer (A), and the melting point of 250°C or lower can improve the impact strength and toughness of a molded body obtained using the resin composition including the 4-methyl-1-pentene-based polymer (A) .

From the above viewpoint, the 4-methyl-1-pentene-based polymer (A) preferably has a melting point (Tm) measured by differential scanning calorimetry (DSC) of 210 to 245°C and more preferably 220 to 240°C.

It is to be noted that the melting point is measured, for example, as follows using a differential scanning calorimeter. 3 to 7 mg of sample is sealed in an aluminum pan and heated from room temperature to 280°C at 10°C/min and held at 300°C for 5 minutes to ensure complete melting. It is then cooled to -50°C at 10°C/min and held at -50°C for 5 minutes, and then the sample is heated again to 300°C at 10°C/min. The peak temperature in this second heating test is employed as the melting point (Tm).

It is noted that the melting points of the 4-methyl-1-pentene-based polymer (B) and the olefinic polymer (C) described below can also be measured in the same manner.

From the viewpoint of capable of retaining the shape at elevated temperature and being excellent in toughness of a molded body to be obtained at low temperature, the 4-methyl-1-pentene-based polymer (A) preferably satisfies the following requirements (c) and (d):

<<Requirement (c)>>

A constituent unit derived from 4-methyl-1-pentene (hereinafter may be referred to as "constituent unit (i)") is in a range of 100 to 90 mol% (preferably 99.9 to 92 mol% and further preferably 99 to 95 mol%) and a constituent unit derived from at least one selected from ethylene and an $\alpha$-olefin having 10 to 20 carbon atoms (hereinafter may be referred to as "constituent unit (iii)") is in a range of 0 to 10 mol% (preferably 0.1 to 8 mol% and further preferably 1 to 5 mol%) [provided that the total amount of the constituent unit derived from 4-methyl-1-pentene and the constituent units derived from ethylene and the $\alpha$-olefin having 10 to 20 carbon atoms is 100 mol%].

In the present specification, the constituent unit derived from $\alpha$-olefin indicates a constituent unit corresponding to $\alpha$-olefin, i.e., a constituent unit represented by $-CH_2-CHR-$ (R is a hydrogen atom or an alkyl group). The constituent unit derived from 4-methyl-1-pentene can also be similarly interpreted and indicates a constituent unit corresponding to 4-methyl-1-pentene (i.e., a constituent unit represented by $-CH_2-CH(-CH_2CH(CH_3)_2)-$).

Examples of the $\alpha$-olefin having 10 to 20 carbon atoms that can be copolymerized with 4-methyl-1-pentene include, for example, 1-decene, 1-dodecene, 1-tetradecene, 1-hexadecene, 1-octadecene, and 1-eicosene. These $\alpha$-

olefin having 10 to 20 carbon atoms may be used singly or in combination of two or more thereof.

<<Requirement (d)>>

The density of the 4-methyl-1-pentene-based polymer (A) is preferably in a range of 820 to 850 kg/m3, more preferably 825 to 845 kg/m3, and further preferably 830 to 840 kg/m$^3$.

When the 4-methyl-1-pentene-based polymer (A) satisfies the above requirements (c) and (d), it is excellent in heat resistance, and a molded body obtained from such a polymer (A) is excellent in balance with mold releasability.

In addition to the above requirements (c) and (d), the 4-methyl-1-pentene-based polymer (A) preferably further satisfies the following requirement (e).

<<Requirement (e)>>

The 4-methyl-1-pentene-based polymer (A) has a melt flow rate (MFR) measured at a temperature of 260°C and a load of 5.0 kgf (49.03 N) in accordance with ASTM D1238, of preferably 1 to 200 g/10 minutes, more preferably 5 to 100 g/10 minutes, and further preferably 10 to 60 g/10 minutes.

From the viewpoint of capable of retaining the shape under elevated temperature and giving excellent toughness of a molded body to be obtained at low temperature, in the 4-methyl-1-pentene-based polymer (A), the temperature at which the value of the loss tangent tan δ determined by dynamic viscoelasticity measurement at a frequency of 10 rad/s (1.6 Hz) in a temperature range of 0 to 240°C is maximum, is preferably 0°C to 60°C, more preferably 5°C to 55°C, and further preferably 10°C to 50°C.

From the viewpoint of capable of retaining the shape under elevated temperature and giving excellent toughness of a molded body to be obtained at low temperature, in the 4-methyl-1-pentene-based polymer (A), the maximum value of loss tangent tan δ determined by dynamic viscoelasticity measurement at a frequency of 10 rad/s (1.6 Hz) in a temperature range of 0 to 100°C is preferably 0.05 to 0.8, more preferably 0.05 to 0.5, and further preferably 0.07 to 0.4.

It is to be noted that details of a dynamic viscoelasticity measurement method are as will be described in the Examples below.

The content of the 4-methyl-1-pentene-based polymer (A) is 50 to 90 parts by mass relative to the total of 100 parts by mass of (A), (B) and (C).

The content of the 4-methyl-1-pentene-based polymer (A) being 50 parts by mass or more, allows a molded body obtained from the 4-methyl-1-pentene copolymer composition (X) to exhibit heat resistance that the 4-methyl-1-pentene-based polymer (A) originally has. The content of the 4-methyl-1-pentene-based polymer (A) being 90 parts by mass or less, does not allow the 4-methyl-1-pentene-based polymer (B) and the thermoplastic elastomer (C) described below to be contained in large amounts in the composition, and a molded body obtained from such a resin composition is excellent in toughness at low temperature, softens to inhibit cracks at room temperature, and is also excellent in pullability.

From the above viewpoint, the upper limit value of the content of the 4-methyl-1-pentene-based polymer (A) is preferably 80 parts by mass relative to 100 parts by mass of the total of the (A), (B) and (C). The lower limit value of the content of the 4-methyl-1-pentene-based polymer (A) is preferably 55 parts by mass and further preferably 60 parts by mass relative to 100 parts by mass of the total of the (A), (B) and (C).

A method for producing the 4-methyl-1-pentene-based polymer (A) can be produced by a known method, and an example of the method includes, for example, the method for producing the 4-methyl-1-pentene-based polymer (B), which will be described later.

<4-Methyl-1-pentene-based polymer (B)>

The 4-methyl-1-pentene-based polymer (B) having a melting point of lower than 200°C or having no melting point observed as measured by differential scanning calorimetry (DSC), is not particularly limited as long as it has a melting point of 200°C or lower or has no melting point observed as measured by differential scanning calorimetry (DSC), and it may be a homopolymer of 4-methyl-1-pentene, or a copolymer of 4-methyl-1-pentene and an α-olefin other than 4-methyl-1-pentene.

The 4-methyl-1-pentene-based polymer (B) having a melting point of lower than 200°C or having no melting point observed as measured by differential scanning calorimetry (DSC), can impart high flexibility to a molded product obtained from the 4-methyl-1-pentene copolymer composition (X).

From the above viewpoint, the 4-methyl-1-pentene-based polymer (B) preferably has a melting point of 160°C or lower or no melting point observed as measured by differential scanning calorimetry (DSC), it more preferably has a melting point of 150°C or lower or no melting point observed, and it further preferably has a melting point of 150°C or lower.

From the above viewpoint, the 4-methyl-1-pentene-based polymer (B) preferably has a lower limit value of the melting point of 110°C or higher or has no melting point observed as measured by differential scanning calorimetry (DSC), and it more preferably has a melting point of 110°C or higher and further preferably has a melting point of 130°C or higher.

From the viewpoint of capable of retaining the shape under elevated temperature and being excellent in toughness of a molded body to be obtained at low temperature, the 4-methyl-1-pentene-based polymer (B) preferably satisfies one or more of the following requirements (f) to (j), more preferably two or more, further preferably three or more, and particularly preferably all.

<<Requirement (f)>>

The 4-methyl-1-pentene-based polymer (B) is composed of 55 to 97 mol% of a constituent unit derived from 4-methyl-1-pentene (hereinafter may be referred to as "constituent unit (i)") and 3 to 45 mol% of a constituent unit derived from at least one selected from ethylene and an $\alpha$-olefin having 3 to 20 carbon atoms (excluding 4-methyl-1-pentene) (hereinafter may be referred to as "constituent unit (ii)"), provided that the sum of the constituent unit (i) and the constituent unit (ii) is 100 mol%.

The above requirement (f) stipulates that the 4-methyl-1-pentene-based polymer (B) has the constituent unit (i) derived from 4-methyl-1-pentene and the constituent unit (ii) derived from at least one selected from ethylene and an $\alpha$-olefin having 3 to 20 carbon atoms (excluding 4-methyl-1-pentene) in a specific proportion.

Specific examples of the above $\alpha$-olefin having 3 to 20 carbon atoms (excluding 4-methyl-1-pentene) include, for example, propylene, 1-butene, 1-hexene, 1-octene, 1-decene, 1-dodecene, 1-octadecene, and 1-hexadecene, and among them, the constituent unit (ii) is preferably at least one selected from ethylene, propylene, and 1-butene.

The constituent unit (ii) may be used singly or in combination of two or more thereof.

For the aforementioned 4-methyl-1-pentene-based polymer (B), the lower limit value of the content of constituent unit derived from 4-methyl-1-pentene is preferably 55 mol% or more, more preferably 65 mol% or more, and further preferably 68 mol% or more. The upper limit value of the content of the constituent unit derived from 4-methyl-1-pentene is, on the other hand, preferably 97 mol% or less, more preferably 93 mol% or less, and further preferably 87 mol% or less.

In the above 4-methyl-1-pentene-based polymer (B), when the content of the constituent unit (i) derived from 4-methyl-1-pentene is not less than the above lower limit value, the tan $\delta$ peak temperature determined by dynamic viscoelasticity measurement reaches in the vicinity of room temperature, as a result of which the tan $\delta$ peak temperature of the 4-methyl-1-pentene copolymer composition (X) can also be easily adjusted within the range described above. When the content of the constituent unit (i) derived from 4-methyl-1-pentene is not more than the above upper limit value, on the other hand, the 4-methyl-1-pentene-based polymer (B) has relaxation at room temperature.

From the above viewpoint, in the 4-methyl-1-pentene-based polymer (B), the upper limit value of the content of constituent units (ii) derived from ethylene and an $\alpha$-olefin having 3 to 20 carbon atoms (excluding 4-methyl-1-pentene) is preferably 45 mol% or less, and the content of this constituent unit (ii) is more preferably 35 mol% or less, and further preferably 32 mol% or less.

The lower limit value of the content of the constituent units (ii) derived from ethylene and $\alpha$-olefin having 3 to 20 carbon atoms (excluding 4-methyl-1-pentene) is preferably 3 mol% or more, more preferably 7 mol% or more, and further preferably 13 mol% or more.

The content percentage (mol%) of each constituent unit constituting the above 4-methyl-1-pentene-based polymer (A) and 4-methyl-1-pentene-based polymer (B) is measured by $^{13}$C-NMR. Details of a measurement method of the content percentage are as will be described in the Examples below.

In a case in which the above constituent unit (ii) is a constituent unit derived from propylene, a tan $\delta$ peak temperature can be set within the range described above, and the 4-methyl-1-pentene copolymer composition (X) used as a mandrel facilitates a molded body imparted with flexibility and pullability to be obtained.

From the above viewpoint, the 4-methyl-1-pentene-based polymer (B) is preferably composed only of the above constituent unit (i) and the above constituent unit (ii).

<<Requirement (g)>>

The 4-methyl-1-pentene-based polymer (B) has a tan $\delta$ peak temperature determined by dynamic viscoelasticity measurement at a frequency of 10 rad/s (1.6 Hz) in a temperature range of -40 to 150°C, which is preferably 15°C to 45°C, more preferably 20°C to 45°C, and further preferably 25°C to 45°C.

Within the above range of the tan $\delta$ peak temperature in the range of -40 to 150°C, a molded body obtained from the 4-methyl-1-pentene copolymer composition (X) changes in hardness in the vicinity of room temperature and is likely to become more flexible, as well as increases its storage modulus and hardens due to rapid deformation of mandrel when pulled out from a rubber hose produced, making it possible to improve its pullability.

Details of a dynamic viscoelasticity measurement method are as will be described in the Examples below.

<<Requirements (h)>>

The density of the 4-methyl-1-pentene-based polymer (B) is preferably 830 to 870 kg/m3, more preferably 830 to 860 kg/m$^3$, and further preferably 830 to 850 kg/m$^3$. It is to be noted that details of a measurement method of the density are as will be described in the Examples below.

The density of the 4-methyl-1-pentene-based polymer (B) can be appropriately changed with a comonomer composition ratio of a 4-methyl-1-pentene · $\alpha$-olefin copolymer. Within the above range of the density of the 4-methyl-1-pentene-based polymer (B), its transparency and mold releasability will be favorable.

From the viewpoint of capable of retaining the shape at elevated temperature and being excellent in toughness of a molded body to be obtained at low temperature, the 4-methyl-1-pentene-based polymer (B) preferably satisfies one or more of the requirements (i) to (k), more preferably two or more of the requirements (i) to (k), and further preferably all of the requirements (i) to (k).

<<Requirement (i)>>

The 4-methyl-1-pentene-based polymer (B) preferably has an intrinsic viscosity [$\eta$] measured at 135°C in decalin in a range of 0.1 to 5.0 dl/g, more preferably 0.5 to 4.0 dl/g, and further preferably 1.0 to 3.5 dl/g. As will be described later, hydrogen combined for use during polymerization enables controlling a molecular weight to be able to freely obtain it ranging from a low molecular weight to a high molecular weight and to adjust the intrinsic viscosity [$\eta$] within the above range. Details of a measurement method of the intrinsic viscosity [$\eta$] are as will be described in the Examples below.

<<Requirement (j)>>

The 4-methyl-1-pentene-based polymer (B) has a weight-average molecular weight (Mw) measured by gel permeation chromatography (GPC), which is preferably 1,000 to 1,000,000 in terms of polystyrene, more preferably 5,000 to 800,000, and further preferably 10,000 to 500,000. Details of a measurement method of the weight-average molecular weight are as will be described in the Examples below.

The 4-methyl-1-pentene-based polymer (B) has a molecular weight distribution (Mw/ Mn), which is a ratio of a weight-average molecular weight to a number-average molecular weight, in a range of preferably 1.0 to 3.5, more preferably 1.2 to 3.0, and further preferably 1.5 to 2.8 or less. When the molecular weight distribution (Mw/Mn) is 3.5 or less, influences of a low molecular weight polymer and a low stereoregular polymer derived from a composition distribution are small, and the mechanical strength of a molded body to be obtained is unlikely to decrease, which is preferred.

<<Requirement (k)>>

The melt flow rate (MFR in accordance with ASTM D1238; temperature 230°C and load 2.16 kgf (21.18 N)) of the 4-methyl-1-pentene-based polymer (B) is preferably within a range of 0.1 to 100 g/10 minutes, more preferably within the range of 0.5 to 50 g/10 minutes, and further preferably within the range of 1.0 to 30 g/10 minutes.

When the melt flow rate (MFR) of the 4-methyl-1-pentene-based polymer (B) is not less than the lower limit value of the above range, favorable fluidity and dispersibility with the 4-methyl-1-pentene-based polymer (A) are be obtained.

When the MFR is not more than the upper limit value of the range described above, the molecular weight of the 4-methyl-1-pentene-based polymer (B) is not too small, and a molded body to be obtained will have a sufficient mechanical strength, which is preferred.

The content of the 4-methyl-1-pentene-based polymer (B) is 5 to 30 parts by mass relative to 100 parts by mass of the total of the above (A), (B) and (C). Within the above range of the content of the polymer (B), its compatibility with the 4-methyl-1-pentene-based polymer (A) improves, and accordingly the 4-methyl-1-pentene-based polymer (A) can be softened efficiently with a small amount of addition, and also the 4-methyl-1-pentene-based polymer (B) has an effect on a molded body, which tends to have better pullability.

From the above viewpoint, the lower limit value of the content of the 4-methyl-1-pentene-based polymer (B) is preferably 10 parts by mass or more and further preferably 15 parts by mass or more, relative to the total of 100 parts by mass of (A), (B) and (C). The upper limit value of the content of the 4-methyl-1-pentene-based polymer (B) is also preferably 25 parts by mass or less relative to the total of 100 parts by mass of the above (A), (B), and (C).

<Method for producing 4-methyl-1-pentene-based polymer (B)>

The method for producing the 4-methyl-1-pentene-based polymer (B) is not particularly limited, but for example, the 4-methyl-1-pentene-polymer (B) can be produced by polymerizing 4-methyl-1-pentene with, when the above requirement (f) is satisfied, the above ethylene and an $\alpha$-olefin having 3 to 20 carbon atoms (excluding 4-methyl-1-pentene) in the presence of an appropriate polymerization catalyst such as a magnesium-supported titanium catalyst or a metallocene catalyst.

As the polymerization catalyst that can be used herein, conventionally publicly known catalysts, such as a magnesium-supported titanium catalyst, metallocene catalysts described in WO01/53369, WO01/27124, JPH3-193796A, or JPH2-41303A, WO2011/055803, WO2014/050817, and the like, are suitably used. The polymerization can be carried out by appropriately selecting it from, for example, liquid-phase polymerization methods including, for example, solution polymerization and suspension polymerization, as well as a gas-phase polymerization method.

In the liquid-phase polymerization method, inert hydrocarbon solvents can be used as solvents constituting a liquid phase. Examples of the inert hydrocarbons described above include, for example, aliphatic hydrocarbons including, for example, propane, butane, pentane, hexane, heptane, octane, decane, dodecane, and kerosene; alicyclic hydrocarbons including for example, cyclopentane, cyclohexane, methylcyclopentane, and methylcyclohexane; aromatic hydrocarbons including, for example, benzene, toluene, and xylene, halogenated hydrocarbons including, for example, ethylene chloride, chlorobenzene, dichloromethane, trichloromethane, and tetrachloromethane, and mixtures thereof.

The liquid-phase polymerization method can be bulk polymerization in which a monomer corresponding to the constituent unit (i) derived from the 4-methyl-1-pentene described above (i.e., 4-methyl-1-pentene) and monomers corresponding to the constituent units (ii) derived from ethylene and the $\alpha$-olefin having 3 to 20 carbon atoms (excluding 4-methyl-1-pentene) described above themselves are solvents.

It is to be noted that copolymerizing the above 4-methyl-1-pentene with the above ethylene and $\alpha$-olefin having 3 to 20 carbon atoms (excluding 4-methyl-1-pentene) in a stepwise manner also allows the constituent unit (i) and constituent unit (ii) to be appropriately controlled.

A polymerization temperature is preferably -50 to 200°C, more preferably 0 to 100°C, and further preferably 20 to 100°C. Polymerization pressure is preferably normal pressure to 10 MPa gauge pressure and more preferably normal pressure to 5 MPa gauge pressure.

Hydrogen may be added upon polymerization for the purpose of controlling a molecular weight of a polymer created and polymerization activity thereof. The appropriate amount of hydrogen to be added is approximately 0.001 to 100 NL relative to 1 kg of the total of the amount of 4-methyl-1-pentene and the amounts of ethylene and $\alpha$-olefin having 3 to 20 carbon atoms (excluding 4-methyl-1-pentene).

<Thermoplastic elastomer (C)>

The 4-methyl-1-pentene copolymer composition (X) includes a thermoplastic elastomer (C) other than the aforementioned 4-methyl-1-pentene-based polymer (A) and the above 4-methyl-1-pentene-based polymer (B) (thermoplastic elastomer (C)).

Thermoplastic elastomer (C) refers to a polymer that exhibits thermoplasticity when heated above its melting point, while exhibiting rubber elasticity at room temperature.

The thermoplastic elastomer (C) is not particularly limited as long as it is a polymer other than the above 4-methyl-1-pentene-based polymer (A) and the above 4-methyl-1-pentene-based polymer (B), and specific examples of the thermoplastic elastomer (C) suitably include an olefinic elastomer (C-1) and a styrenic elastomer (C-2).

<<Olefinic elastomer (C-1)>>

An example of the first aspect of the olefinic elastomer (C-1) includes a copolymer of one selected from the group consisting of ethylene and propylene and at least one selected from the group consisting of butadiene, hydrogenated butadiene, isoprene, hydrogenated isoprene, isobutylene, and an $\alpha$-olefin.

A manner of the copolymerization may be either block copolymerization or graft copolymerization, but only when it is a copolymer composed of one selected from the group consisting of ethylene and propylene, and an $\alpha$-olefin, the manner of the copolymerization may be, for example, random copolymerization.

The $\alpha$-olefin described above is an olefin having a double bond at one end of the molecular chain, and, for example, 1-butene and 1-octene are preferably used.

Examples of the olefinic elastomer (C-1) include, for example, a block copolymer of a polyolefin block forming a highly crystalline polymer such as a polypropylene to be a hard moiety, and a monomer copolymer exhibiting non-crystallinity, to be a soft moiety, and specific examples thereof can include, for example, an olefin (crystalline) ethylene · butylene · olefin block copolymer and a propylene· olefin (amorphous) · propylene block copolymer.

Specific examples include, for example, those commercially available, from ENEOS Materials Corporation under the trade name of DYNARON (registered trademark), from Mitsui Chemicals, Inc. under the trade names of TAFMER (registered trademark) and TAFMER PN (registered trademark), from Dow Chemical Company Ltd. under the trade names of ENGAGE (registered trademark) and VERSIFY (registered trademark), and from ExxonMobil Corporation under the trade names of Vistamaxx (registered trademark).

An example of the second aspect of the olefinic elastomer includes a blend of one selected from the group consisting of ethylene and propylene, and one selected from the group consisting of an ethylene · propylene copolymer, an ethylene · propylene · diene copolymer, an ethylene · butene copolymer, and a hydrogenated styrene-butadiene. In such a blend, the ethylene · propylene copolymer, ethylene · propylene · diene copolymer, and ethylene · butene copolymer, may be partially or completely cross-linked.

Specific examples of the olefinic elastomers include, for example, those commercially available, from Mitsui Chemicals, Inc. under the trade name of Milastomer (registered trademark), from Sumitomo Chemical Co., Ltd. under the trade name of ESPOLEX (registered trademark), from Mitsubishi Chemical Corporation under the trade names of Thermolan (registered trademark) and Xelas (registered trademark), and from Celanese Corporation under the trade name Santoprene (registered trademark).

For example, the olefinic elastomer according to the present invention may also be modified with at least one type of functional group selected from the group consisting of an acid anhydride group, a carboxyl group, an amino group, an imino group, an alkoxysilyl group, a silanol group, a silyl ether group, a hydroxyl group, and an epoxy group.

<<Styrenic elastomer (C-2)>>

Examples of the styrenic elastomer (C-2) can include, for example, a block copolymer (SBS) of a polystyrene block to be a hard moiety (crystal moiety) and a diene-based monomer block to be a soft moiety, a hydrogenated styrene· butadiene · styrene block copolymer (HSBR), a styrene•ethylene · propylene · styrene block copolymer (SEPS), a styrene · ethylene · butene · styrene block copolymer (SEBS), a styrene · isoprene · styrene block copolymer (SIS), a styrene · isobutylene · styrene copolymer (SIBS), and a styrene · isobutylene copolymer (SIB).

The styrenic elastomer may be used singly or in combination of two or more thereof.

Specific examples of the hydrogenated styrene· butadiene · styrene block copolymers include those commercially available from ENEOS Materials Corporation under the trade name Dynalon (registered trademark).

The styrene · ethylene · propylene · styrene block copolymer is obtained by hydrogenating a styrene · isoprene · styrene block copolymer (SIS). Specific examples of SIS include, for example, those commercially available, from ENEOS Materials Corporation under the trade name of SIS (registered trademark), from KURARAY CO., LTD. under the trade name of Hybler (registered trademark), and from Kraton Polymers Japan Ltd. under the trade name of Clayton D (registered trademark).

Specific examples of styrene · ethylene · propylene · styrene block copolymers (SEPS) include for example, those commercially available, from KURARAY CO., LTD. under the trade name of SEPTON (registered trademark), and from Kraton Polymers Japan Ltd. under the trade name of CLAYTON (registered trademark).

Specific examples of SEBS include, for example, those commercially available from Asahi Kasei Corporation under the trade name Tuftec (registered trademark) or from Kraton Polymers Japan Ltd. under the trade name of Kraton (registered trademark).

Specific examples of the styrene · isobutylene copolymer (SIB) and styrene · isobutylene · styrene copolymer (SIBS) include, for example, those commercially available from Kaneka Corporation under the trade name: SIBSTAR (registered trademark).

From the viewpoint of capable of retaining the shape at elevated temperature and being excellent in toughness of a molded body to be obtained at low temperature, the melt flow rate (MFR in accordance with ASTM D1238; temperature 230°C, load 2.16 kgf (21.18 N)) of thermoplastic elastomer (C) is preferably within a range of 0.1 to 100 g/10 minutes, more preferably within the range of 0.5 to 50 g/10 minutes, and further preferably within the range of 1.0 to 30 g/10 minutes.

From the viewpoint of capable of retaining the shape at elevated temperature and being excellent in toughness of a molded body to be obtained at low temperature, the thermoplastic elastomer (C) has a melting point of lower than 200°C as measured by differential scanning calorimetry (DSC) or has no melting point observed, and it has a melting point of 160°C or lower or no melting point observed.

It is to be noted that details of differential scanning calorimetry measurement are as will be described in the Examples below.

The content of the thermoplastic elastomer (C) is 5 to 30 parts by mass relative to the total of 100 parts by mass of (A), (B) and (C) described above.

Within the above range of the content of the thermoplastic elastomer (C), flexibility at room temperature and toughness at low temperature will be improved.

From the above viewpoint, the lower limit value of the content of the thermoplastic elastomer (C) is preferably 10 parts by mass or more relative to 100 parts by mass of the total amount of (A), (B) and (C). The upper limit value of the content of the thermoplastic elastomer (C) is preferably 25 parts by mass or less relative to 100 parts by mass of the total amount of (A), (B) and (C).

<<Other Component>>

For example, the 4-methyl-1-pentene copolymer composition (X) may include, in addition to the aforementioned 4-methyl-1-pentene-based polymer (A), 4-methyl-1-pentene-based polymer (B), and the thermoplastic elastomer (C), other resin or a polymer and/or an additive for resins (hereinafter also referred to as an "other components") other than the aforementioned 4-methyl-1-pentene-based polymer (A), 4-methyl-1-pentene-based polymer (B), and thermoplastic elastomer (C), depending on their applications.

Examples of the additives for such resins include, for example, a pigment, a dye, a filler, a lubricant, a plasticizer, a mold releasing agent, an antioxidant, a flame retardant, an ultraviolet absorber, an antibacterial agent, a surfactant, an antistatic agent, a weather stabilizer, a heat stabilizer, an anti-slip agent, an anti-blocking agent, a foaming agent, a crystallization aid, an anti-fogging agent, a (transparent) nucleating agent, an anti-aging agent, a hydrochloric acid absorbent, an impact modifier, a cross-linking agent, a co-cross-linking agent, a cross-linking aid, an adhesive, a softener, and a processing aid. These additives can be used singly or in combination of two or more thereof.

Examples of the other resins or polymers to be added include, for example, a polystyrene, an acrylic resin, a polyphenylene sulfide resin, a polyetheretherketone resin, a polyester resin, a polysulfone, a polyphenylene oxide, a polyimide, a polyetherimide, an acrylonitrile · butadiene · styrene copolymer (ABS), ethylene · α-olefin copolymer rubber, conjugated diene-based rubber, a phenol resin, a melamine resin, a polyester resin, a silicone resin, and an epoxy resin. The content of these resins or polymers is preferably 0.1 to 30% by mass relative to the total mass of the olefin polymer composition (M).

Examples of the pigments include inorganic pigments (for example, titanium oxide, iron oxide, chromium oxide, and cadmium sulfide) and organic pigments (azo lake-based, thioindigo-based, phthalocyanine-based, and anthraquinone-based pigments). Examples of the dyes include, for example, azo-based, anthraquinone-based, and triphenylmethane-based dyes. The content of these pigments and dyes is not particularly limited, but the total content is preferably 5% by mass or less, more preferably 0.1 to 3% by mass relative to the total mass of the olefin polymer composition (M).

Examples of the fillers include, for example, a glass fiber, a carbon fiber, a silica fiber, a metal (such as stainless steel, aluminum, titanium, or copper) fiber, carbon black, silica, glass beads, silicates (such as calcium silicate, talc, and clay), metal oxides (such as iron oxide, titanium oxide, and alumina), metal carbonates (such as calcium sulfate and barium sulfate), powders of various metals (such as magnesium, silicon, aluminum, titanium, and copper), mica, and glass flakes. These fillers may be used singly or in combination of two or more thereof.

Examples of the lubricant include, for example, wax (such as carnauba wax), a higher fatty acid (such as stearic acid), a higher alcohol (such as stearyl alcohol), and a higher fatty acid amide (such as stearic acid amide).

Examples of the plasticizers include, for example, an aromatic carboxylic acid ester (such as dibutyl phthalate), an aliphatic carboxylic acid ester (such as methyl acetyl ricinoleate), an aliphatic dialboxylic acid ester (such as an adipic acid-propylene glycol-based polyester), an aliphatic tricarboxylic acid ester (such as triethyl citrate), a phosphoric acid triester (such as triphenyl phosphate), an epoxy fatty acid ester (such as epoxybutyl stearate), and a petroleum resin.

Examples of the mold releasing agents include, for example, a lower (C1-4) alcohol ester of higher fatty acid (such as butyl stearate), a polyhydric alcohol ester of fatty acid (C4-30) (such as hydrogenated castor oil), a glycol ester of fatty acid, and liquid paraffin.

Examples of the antioxidants include a phenolic antioxidant (such as 2,6-di-t-butyl-4-methylphenol), a polycyclic phenolic antioxidant (such as 2,2'-methylenebis(4-methyl-6-t-butylphenol), a phosphorus-based antioxidant (such as tetrakis (2,4-di-t-butylphenyl)-4,4-biphenylene diphosphonate), and an amine-based antioxidant (such as N,N-diisopropyl-p-phenylenediamine).

Examples of the flame retardants include organic flame retardants (such as nitrogen-containing-based, sulfur-containing-based, silicon-containing-based, and phosphorus-containing-based flame retardants) and inorganic flame retardants (such as antimony trioxide, magnesium hydroxide, zinc borate, and red phosphorus).

Examples of the ultraviolet absorbers include, for example, benzotriazole-based, benzophenone-based, salicylic acid-based, and acrylate-based ultraviolet absorbers.

Examples of the antibacterial agents include, for example, a quaternary ammonium salt, a pyridine-based compound, an organic acid, an organic acid ester, a halogenated phenol, and organic iodine.

Examples of the surfactants include nonionic, anionic, cationic or amphoteric surfactants.

Examples of the nonionic surfactants include, for example, polyethylene glycol type nonionic surfactants such as a higher alcohol ethylene oxide adduct, a fatty acid ethylene oxide adduct, a higher alkylamine ethylene oxide adduct, and a polypropylene glycol ethylene oxide adduct; and polyhydric alcohol type nonionic surfactants such as a polyethylene oxide, a fatty acid ester of glycerin, a fatty acid ester of pentaerythritol, a fatty acid ester of sorbitol or sorbitan, an alkyl ether of a polyhydric alcohol, and an aliphatic amide of an alkanolamine. Examples of the anionic surfactants include, for example, a sulfuric acid ester salt such as an alkali metal salt of higher fatty acid, sulfonates such as an alkylbenzene sulfonate, an alkyl sulfonate, and paraffin sulfonate, and a phosphorus acid ester salt such as a higher alcohol phosphorous acid ester salt, and examples of the cationic surfactants include, for example, a quaternary ammonium salt such as an alkyltrimethylammonium salt. Amphoteric surfactants include amino acid-type ampholytic surfactants such as higher alkyl aminopropionates, betaine-type amphoteric surfactants such as higher alkyl dimethyl betaine and higher alkyl dihydroxyethyl betaine, and the like.

Examples of the antistatic agent include the aforementioned surfactants, fatty acid esters, and polymer type antistatic agents. Examples of the fatty acid esters include, for example, esters of stearic acid and oleic acid, and examples of the polymer type antistatic agents include a polyether ester amide.

The content of various additives such as the aforementioned filler, lubricant, plasticizer, mold releasing agent, antioxidant, flame retardant, ultraviolet absorber, antibacterial agent, surfactant, and antistatic agent, is not particularly limited as long as it does not impair the purpose of the present invention, depending on their applications, but each content of the additives is preferably 0.1 to 30% by mass, relative to the total mass of the 4-methyl-1-pentene copolymer composition (X).

[Method for producing 4-methyl-1-pentene copolymer composition (X)]

The method for producing the 4-methyl-1-pentene copolymer composition (X) is not particularly limited, but for example, it is obtained by mixing the 4-methyl-1-pentene-based copolymer (A), the 4-methyl-1-pentene-based copolymer (B), the thermoplastic elastomer (C), and other optional component in the addition proportion described above, and then melt-kneading them.

A method of the melt-knead is not particularly limited, and can be carried out using a commonly available melt-kneading apparatus such as an extruder. For example, a cylinder temperature of a portion where kneading is performed in a kneader is usually preferably 220 to 300°C and more preferably 250 to 290°C. The temperature of 220°C or higher enables sufficient melt kneading, and can improve the physical properties of the 4-methyl-1-pentene copolymer composition (X). The cylinder temperature of 300°C or lower, on the other hand, can inhibit thermal degradation of the 4-methyl-1-pentene-based polymer (A), 4-methyl-1-pentene-based polymer (B), and thermoplastic elastomer (C). A kneading time is usually preferably 0.1 to 30 minutes and particularly preferably 0.5 to 5 minutes. The kneading time of 0.1 minutes or longer enables sufficient melt-kneading, and the kneading time of 30 minutes or shorter can inhibit thermal degradation of the 4-methyl-1-pentene-based polymer (A), 4-methyl-1-pentene-based polymer (B), and thermoplastic elastomer (C).

<Molded body>

The molded body according to the present invention is preferably composed of the aforementioned 4-methyl-1-pentene copolymer composition (X). The molded body is not particularly limited, and examples thereof include, for example, an extruded product and an injection molded body.

A method for producing the molded body is not particularly limited, and for example, conventionally known production methods can be used, including, for example, extruding, compression molding, injection molding, 3D modeling, and microwave heating molding. Among these molding methods, extruding or injection molding is preferred.

Applications of the molded bodies include, for example, mandrels and sheaths, as well as automobile parts (a front end, fan shroud, cooling fan, engine under cover, engine cover, radiator box, side door, back door inner, back door outer, outer panel, roof rail, door handle, luggage box, wheel cover, steering wheel, cooling module, air cleaner, spoiler, fuel tank, platform and side member, motor connector housing, bumper, instrument panel skin material, control cable covering material, and electrical wire covering material), home appliance material parts, electrical · electronic components, construction components, civil engineering components, agricultural materials, and daily necessities.

Among these, an application of the molded product is preferably a mandrel and further preferably a mandrel for producing a rubber hose. The mandrel is preferably formed of the 4-methyl-1-pentene copolymer composition (X).

The molded body composed of the 4-methyl-1-pentene copolymer composition (X) according to the present invention is preferably a mandrel and more preferably a mandrel for producing a rubber hose. As the 4-methyl-1-pentene copolymer composition (X) satisfies the specific requirements (a) and (b), the mandrel according to the present invention softens without breakage and chipping even when a mandrel that has become larger in diameter is wound in reel form at room temperature and has favorable processability and sufficient toughness even at low temperature. Moreover, when the fabricated rubber hose is pulled out by hand or by compressed air let in, a mandrel having the tan $\delta$ peak temperature and peak value within appropriate ranges hardens due to rapid deformation when pulled out from the fabricated rubber hose, as a result of which its dimensional change is less likely to occur upon the pull out, making it easier to pull out the mandrel.

The mandrel according to the present invention is formed into a continuous cylindrical shape. From the viewpoint of efficiently producing a rubber hose, a length of the mandrel is generally 100 m or longer and preferably 200 m or longer. As the mandrel is cut to the desired length after pulled out from the obtained rubber hose, the longer the mandrel is molded, the more easily each step such as vulcanization treatment can be continuously performed to improve productivity, which is preferred.

An inner diameter of a rubber hose is also designed based on a diameter of a mandrel. Generally, a mandrel has a diameter of 2 to 30 mm and preferably 3 to 28 mm.

Furthermore, dimensional accuracy of a mandrel requires, for example, dimensional accuracy in which a tolerance (i.e., a difference between the maximum value and the minimum value of allowable dimensional errors) is less than ± 0.18 mm with respect to the diameter of the mandrel, and preferably dimensional accuracy of less than ± 0.15 mm.

<Method for producing rubber hose>

These molded bodies can be produced, for example, by the method described below.

The method for producing a rubber hose according to the present invention preferably includes a step of extruding the 4-methyl-1-pentene copolymer composition (X) to obtain a mandrel, and a step of producing a rubber hose using the mandrel obtained in the above step and further preferably includes a step of injection molding the 4-methyl-1-pentene copolymer composition (X) to obtain a mandrel, a step of inserting an unvulcanized rubber hose into the mandrel obtained in the above step to perform vulcanization treatment and obtain a vulcanized rubber hose, and a step of pulling out the vulcanized rubber hose from the mandrel.

More details of the method for producing a rubber hose are as follows: For example, an unvulcanized rubber composition to form an inner rubber layer is fed to an extruding machine equipped with a crosshead, and a mandrel is obtained so that the crosshead is at right angle to the extrusion direction. While the obtained mandrel is extruded and moved, an outer circumference thereof may be uniformly covered with an unvulcanized rubber composition layer to its desired thickness. Then, two layers of reinforcing materials are wound around the outside of these unvulcanized rubber composition layers or so as to cross each other, if necessary. Using other extruder, the outer layer of the unvulcanized rubber composition layer may further be covered with a rubber material. Thereafter, a vulcanization reaction is carried out using appropriate equipment such as a high temperature steam furnace or continuous oven. In a case in which rubber cross-linking (vulcanization) is carried out using sulfur, a temperature of the vulcanization reaction is generally 160°C. Finally, water pressure is applied to the mandrel, and a rubber hose is pulled out therefrom to obtain it.

EXAMPLES

Hereinafter the present invention will be described in detail with reference to Examples, but the present invention is not limited to these Examples.

The methods for measuring physical properties of the compositions, the polymers used, methods for fabricating the test pieces, and evaluation methods, in the following Examples and Comparative Examples are as follows.

[Method for measuring physical properties of 4-methyl-1-pentene copolymer composition (X)]

<Content percentage of constituent unit>

The 4-methyl-1-pentene content and $\alpha$-olefin content in the polymer were quantified based on the results measured by $^{13}$C-NMR using the following pieces of apparatus and conditions. However, the $\alpha$-olefin content in the measurement results does not include the content of 4-methyl-1-pentene.

Using a nuclear magnetic resonance apparatus (model number: ECP500, manufactured by JEOL Ltd.), measurement was made with an orthodichlorobenzene/deuterated benzene (80/20% by volume) mixed solvent, sample concentration: 55 mg/0.6 mL, measurement temperature: 120°C, observation nucleus: $^{13}$C (125 MHz), sequence: single pulse proton decoupling, pulse width: 4.7 $\mu$s (45° pulse), repetition time: 5.5 seconds, the number of accumulations: 10,000 times or more, and chemical shift reference value: 27.50 ppm. A composition of the 4-methyl-1-pentene-based polymer (A) was quantified from the obtained $^{13}$C-NMR spectrum.

<Intrinsic viscosity>

The intrinsic viscosity is the value measured in decalin at 135°C using an Ubbelohde viscometer. Approximately 20 mg of the polymerized powder and pellets or resin lump obtained below were collected and dissolved in 15 mL of decalin, and the specific viscosity $\eta$sp of the resulting decalin solution was measured in an oil bath heated to 135°C. To the decalin solution was added 5 mL of decalin to dilute the solution, and then the specific viscosity $\eta$sp was measured under the same conditions. This dilution operation was repeated twice, and a value of $\eta$sp/C when the polymer concentration (C) was extrapolated to zero was determined as an intrinsic viscosity [$\eta$] (see the following formula).

$$[\eta]=\lim(\eta sp/C) \quad (C \to 0)$$

<Weight-average molecular weight (Mw), number-average molecular weight (Mn) and molecular weight distribution (Mw/Mn) >

A molecular weight was measured by gel permeation chromatography (GPC).

Specifically, an ALC/GPC150-C plus type (with an integrated differential refractometer detector) manufactured by Waters Corporation was used as a liquid chromatograph, two GMH6-HT columns manufactured by Tosoh Corporation and two GMH6-HTL columns manufactured by Tosoh Corporation, were used as separation columns connected in series, a mobile phase medium that was o-dichlorobenzene with 0.025% by mass dibutylhydroxytoluene (manufactured by Takeda Chemical Industries, LTD.) as an antioxidant, was used, the mobile phase medium was moved at 1.0 mL/minutes, a sample concentration was set at 15 mg/10 mL, an injection volume of the sample was 500 µL, and a detector that was a differential refractometer was used. As the standard polystyrene, standard polystyrenes manufactured by Tosoh Corporation and having a weight-average molecular weight (Mw) of 1,000 to 4,000,000 was used.

The obtained chromatograms were analyzed by a publicly known method by creating a calibration curve by using standard polystyrene samples, thereby calculating a weight average molecular weight (Mw), number average molecular weight (Mn), and molecular weight distribution (Mw/Mn values). The measurement time per sample was 60 min.

<Melting Point (Tm)>

Using a differential scanning calorimeter (model number: DSC8500, manufactured by PerkinElmer Inc.), the melting point (Tm) of the polymer was measured by DSC measurement.

Specifically, 7 to 12 mg of the polymer obtained in the following Synthesis Example was sealed in an aluminum pan and heated from room temperature to 200°C at a rate of 10°C/min. Thereafter, the polymer was held at 250°C for 5 minutes in order to completely melt it, and then cooled to -50°C at a rate of 10°C/min. After being held for 5 minutes at -50°C, the sample was then heated again to 250°C at a rate of 10°C/min. The peak temperature at this additional (second) heating was adopted as the melting point (Tm).

<Density>

Measurement was made using a density gradient tube in accordance with JIS K7112 (1999).

<Melt flow rate (MFR)>

The 4-methyl-1-pentene-based polymer (A) was measured at a temperature of 260°C and a load of 5.0 kgf (49.03 N) according to ASTM D1238. The 4-methyl-1-pentene-based polymer (B) was measured at a temperature of 230°C and a load of 2.16 kgf (21.18 N) in accordance with ASTM D1238.

<Fabrication of molded body>

Using the 4-methyl-1-pentene copolymer composition (X) and an injection molding machine (model number: ES75SXIII manufactured by Toshiba Machine Co., Ltd., with mold clamping force of 735 kN and a screw diameter of Φ 32 mm), a square plate with 120 mm in length × 130 mm in width × 2.0 mm in thickness, a dumbbell type test specimen with a thickness of 3.2 mm in accordance with ASTM D638 Type IV for measurement of mechanical properties, a bending test specimen with a thickness of 3.2 mm in accordance with ASTM D790, and an Izod test specimen with a thickness of 6.0 mm in accordance with ASTM D256, were fabricated. Note, however, the major molding conditions are as follows.

- Cylinder setting temperature: 220 to 240°C
- Screw rotation speed: 100 rpm
- Injection pressure: 30 to 40 MPa
- Injection speed: 25 to 30 mm/second
- Mold temperature: 30 to 60°C
- Cooling time: 30 to 60 seconds

<Mechanical properties: tensile strength at break, tensile elongation at break, and flexural modulus >

The physical properties of the molded body were measured by the following method using the test specimens fabricated above.

The tensile strength at break and elongation at break of the molded body were measured by a tensile test using the above dumbbell type test specimen. A tensile test was conducted using a 5 specimen-loaded tensile tester (model number: 2005X-5, manufactured by INTESCO Co., Ltd.) at 23°C and a test speed of 50 mm/min in accordance with ASTM D638.

For the flexural modulus, a test was conducted using the test specimen with a thickness of 3.2 mm. A test was conducted using a 5-strand bending tester (model number: AG-1kNX plus, manufactured by Shimadzu Corporation,) at 23°C in accordance with ASTM D790, with a span distance of 51 mm, and a test speed of 1.3 mm/min.

It can be said that the larger the value of tensile elongation at break, the more excellent the toughness and flexibility at room temperature. It can also be said that the larger the tensile strength at break and the value of flexural modulus, the more excellent the rigidity.

<Toughness: Izod impact test>

A notch (a cut) was processed using a cutter on one side of the Izod test specimen having a thickness of 6.0 mm obtained by the method described above. At 23°C and -15°C, the test specimen was struck with a hammer from the direction of the notched test specimen under conditions of a hammer capacity of 3.92 J and a miss-blow angle of 148.9°, fracture and non-fracture status of the test specimen was confirmed, and an impact value (J/m) when the test specimen was fractured was measured. An Izod impact test was conducted on each of five test specimen, and an average value of the obtained impact values was determined and evaluated. It can be said that the larger the impact value, the more excellent the toughness (resistance to fracture). In a case in which some of the five test specimens were fractured (that is, all the five test specimens were not fractured), an average value was determined using the impact values of only the fractured test specimens and then evaluated.

<Dynamic viscoelasticity>

A test specimen having dimensions of 35 mm in length $\times$ 10 mm in width was fabricated by punching out the molded body of the square plate with a thickness of 2.0 mm obtained by the above method. Using a rheometer (model number: MCR301 manufactured by Anton Paar GmbH), under the conditions of a torsion mode, frequency of 10 rad/s (1.6 Hz), strain setting of 0.1%, rate of temperature rise of 2°C/min., a tan $\delta$ peak temperature in a temperature range of 0 to 240°C and a tan $\delta$ peak value in a temperature range of 0 to 100°C were observed for test specimens of 4-methyl-1-pentene-based polymer (A) and 4-methyl-1-pentene copolymer composition (X). Under similar measurement conditions, a tan $\delta$ peak temperature and a tan $\delta$ peak value in the temperature range of -40 to 150°C were observed for the test specimen of 4-methyl-1-pentene-based polymer (B).

<Shape retention: rate of dimensional change (molding shrinkage rate)>

The shrinkage rate is determined by measuring lengths (four sides) of the molded body of the square plate with a thickness of 2.0 mm fabricated above to determine their average value, and then calculating the shrinkage rate using a rate of dimensional change according to the following formula.

Rate of dimensional change (%) = [(Length of injection mold - length of molded body of square plate)/(Length of injection mold)] $\times$ 100

It can be said that the smaller the value of the rate of dimensional change, the more excellent the shape retention performance under elevated temperatures.

<Mold releasability (critical surface tension)>

In order to evaluate the critical surface tension, specimens having dimensions of 75 mm in length and 75 mm in width were cut from the molded body of the square plate with a thickness of 2.0 mm obtained by the method described above, and one of the specimens was used as a test specimen. Mixed liquids for wet tension tests of an ethylene glycol monoethyl ether/formamide mixture with surface tension adjusted to 31 mN/m, 34 mN/m, 37 mN/m, and 40 mN/m, respectively (manufactured by FUJIFILM Wako Pure Chemical Corporation) were each dropped onto a surface of the test specimen under an atmosphere of 23°C and 50% relative humidity. Next, a contact angle of each mixed liquid for a tension test on the test specimen was measured using an image processing · solid-liquid interface analysis system (model number: DropMaster 500, manufactured by Kyowa Interface Science Co., Ltd.).

Using a Zisman plot method, the surface tension values of each mixed liquid for tension tests, taken as those of the vertical axis and the measured values of the contact angles (each was converted to radian unit, and taken as a cosine thereof (cos θ).) as those of the horizontal axis, were plotted on a graph, to obtain a line of a linear function according to a least-squares method. The line of the linear function was extrapolated up to cos θ = 1.0, which was considered to be a completely wet state, and tension at an intersection with the horizontal axis was determined as the critical surface tension (mN/m). It can be said that the smaller the value of critical surface tension (mN/m), the more excellent the mold releasability.

<Pullability>

Using a 30 mm Φ single screw extruder, a strand of 4-methyl-1-pentene polymer composition (X) was collected using a circular die (5.0 mm Φ) . An unvulcanized rubber composition (thickness: 0.5 mm) was wound around the strand and both were then heated at 160°C for 60 minutes and vulcanized to form into a rubber hose. The rubber hose formed body was then cooled to 23°C, and an air gun connected to compressed air was inserted into the end, and compressed air is pushed out from the end to simulatively reproduce the situation in which a mandrel is pulled out from a vulcanized rubber hose formed body.

In this case, a case in which the mandrel was pulled out by air fed once, is determined to have excellent pullability and is evaluated as "A", a case in which the mandrel was pulled out by air fed several times is evaluated as "B", and a case in which the mandrel was not pulled out was evaluated as "C". The results are shown in Table 2.

[Production of 4-methyl-1-pentene-based polymers (A-1) and (A-2)]

According to the polymerization method described in Comparative Example 7 and Comparative Example 9 of WO2006/054613, proportions of 4-methyl-1-pentene, 1-decene, 1-hexadecene, 1-octadecene, and hydrogen were changed to obtain a polymer (A-1) and a polymer (A-2) having physical properties shown in Table 1.

[Synthesis of 4-methyl-1-pentene-based polymer (B)]

<Synthesis Example B-1>

A SUS autoclave with stirring blades and having a volume of 1.5 L, which was fully substituted with nitrogen was charged with 750 mL of 4-methyl-1-pentene at 23°C. This autoclave was charged with 0.75 mL of a 1.0 mmol/mL toluene solution of triisobutylaluminum (TIBAL), and the stirrer was turned.

The autoclave was then heated to an internal temperature of 60°C and pressurized with propylene to a total pressure of 0.13 MPa (gauge pressure). Subsequently, 1 mmol of methylaluminoxane preliminarily prepared in terms of Al and 0.34 mL of a toluene solution containing 0.01 mmol of diphenylmethylene (1-ethyl-3-t-butyl-cyclopentadienyl) (2,7-di-t-butyl-fluorenyl) zirconium dichloride were pressurized into the autoclave with nitrogen to start polymerization. The temperature was adjusted so that the internal temperature of the autoclave was 60°C during the polymerization reaction. 60 minutes after the start of the polymerization, 5 mL of methanol was pressurized into the autoclave with nitrogen to complete the polymerization, and the autoclave was depressurized to atmospheric pressure. Thereafter, acetone was poured into the reaction solution with stirring.

The powdery polymer containing the obtained solvent was dried at 100°C under reduced pressure for 12 hours. The amount of the obtained polymer (B-1) was 36.9 g, the content of the constituent unit (i) in the polymer was 72.5 mol%, and the content of the constituent unit (ii) was 27.5 mol%. The physical properties of the obtained polymer (B-1) are shown in Table 1.

<Synthesis Example B-2>

A SUS autoclave with stirring blades and having a volume of 1.5 L, which was fully substituted with nitrogen was charged with 300 mL of n-hexane (dried with activated alumina in a dry nitrogen atmosphere) and 450 mL of 4-methyl-1-pentene at 23°C. This autoclave was charged with 0.75 mL of a 1.0 mmol/mL toluene solution of triisobutylaluminum (TIBAL), and the stirrer was turned.

The autoclave was then heated to an internal temperature of 60°C and pressurized with propylene to a total pressure of 0.19 MPa (gauge pressure). Subsequently, 1 mmol of methylaluminoxane preliminarily prepared in terms of Al and 0.34 mL of a toluene solution containing 0.01 mmol of diphenylmethylene (1-ethyl-3-t-butyl-cyclopentadienyl) (2,7-di-t-butyl-fluorenyl) zirconium dichloride were pressurized into the autoclave with nitrogen to start polymerization.

The temperature was adjusted so that the internal temperature of the autoclave was 60°C during the polymerization reaction. 60 minutes after the start of the polymerization, 5 mL of methanol was pressurized into the autoclave with nitrogen to complete the polymerization, and the autoclave was depressurized to atmospheric pressure. Thereafter, acetone was poured into the reaction solution with stirring.

The powdery polymer containing the obtained solvent was dried at 100°C under reduced pressure for 12 hours. The amount of the obtained polymer (B-2) was 44.0 g, the content of the constituent unit (i) in the polymer was 84.1 mol%, and the content of the constituent unit (ii) was 15.9 mol%. The physical properties of the obtained polymer (B-2) are shown in Table 1.

In Table 1, the "type of α-olefin" refers to a type of α-olefin other than 4-methyl-1-pentene. Furthermore, the "constituent unit (ii) derived from an α-olefin" refers to a constituent unit derived from at least one selected from ethylene and an α-olefin having 3 to 20 carbon atoms (excluding 4-methyl-1-pentene) and the "constituent unit (iii) derived from an α-olefin" refers to a constituent unit derived from at least one selected from ethylene and an α-olefin having 10 to 20 carbon atoms.

[Table 1]

| | | | Polymer (A-1) | Polymer (A-2) | Polymer (B-1) | Polymer (B-2) |
|---|---|---|---|---|---|---|
| Composition | Content of constituent unit (i) derived from 4-methyl-1-pentene | mol% | 93.2 | 96.5 | 72.5 | 84.1 |
| | Type of α-olefin | - | 1-Hexadecene 1-Octadecene | 1-Decene | Propylene | Propylene |
| | Content of constituent unit (ii) or (iii) derived from the α-olefin | mol% | 6.8 | 3.5 | 27.5 | 15.9 |
| Intrinsic viscosity [η] | | dl/g | 2.2 | 2.2 | 1.5 | 1.5 |
| Mw | | | 440,000 | 424,000 | 337,000 | 340,000 |
| Mw/Mn | | | 4.6 | 3.6 | 2.1 | 2.1 |
| Density | | kg/m$^3$ | 834 | 833 | 839 | 838 |
| Melting point (Tm) | | °C | 224 | 238 | Not observed | 132 |
| Melt flow rate (MFR) | | g/10min | 22 | 25 | 10 | 10 |
| Tanδ peak temperature | | °C | 30.6 | 41 | 30 | 43 |
| Tanδ peak value | | - | 0.18 | 0.08 | 2.78 | 1.46 |

[Thermoplastic elastomer (C)]

The thermoplastic elastomer (C) for use was as described below.

- An olefinic thermoplastic elastomer (C-1-1): Product name: Vistamaxx (registered trademark) 6202 (MFR (230°C, load 2.16 kgf (21.18 N)) = 20 g/10 minutes, and Tm (melting point) = 110°C), manufactured by ExxonMobil Corporation.
- Styrenic thermoplastic elastomer (C-2-1): Product name: Tuftec (registered trademark) H-1052 (MFR (230°C, load 2.16 kgf (21.18 N)) = 13 g/10 minutes, and Tm (melting point) was not observed), manufactured by Asahi Kasei Corporation.
- An olefinic thermoplastic elastomer (C-1-2): Product name: TAFMER (registered trademark) PN-2060 (MFR (230°C, load 2.16 kgf (21.18 N)) = 6.0 g/10 minutes, Tm (melting point) = 160°C), manufactured by Mitsui Chemicals, Inc.

[Example 1]

In a material composition of a resin composition containing 80 parts by mass of 4-methyl-1-pentene-based polymer (A-1), 10 parts by mass of 4-methyl-1-pentene-based polymer (B-1), and 10 parts by mass of thermoplastic elastomer (C-1-1), pellets were obtained by melt-kneading them as by the method described above. The pellets were then used to fabricate a molded body and various test specimens as by the method described above, and physical properties were evaluated as described above. The results are shown in Table 2.

[Example 2]

Pellets and various test specimens were fabricated employing the same method as in Example 1 except that a resin composition containing 70 parts by mass of 4-methyl-1-pentene-based polymer (A-1), 20 parts by mass of 4-methyl-1-pentene-based polymer (B-1), and 10 parts by mass of thermoplastic elastomer (C-1-1), was prepared, and physical properties were evaluated as described above. The results are shown in Table 2.

[Example 3]

Pellets and various test specimens were fabricated employing the same method as in Example 1 except that a resin composition containing 60 parts by mass of 4-methyl-1-pentene-based polymer (A-1), 20 parts by mass of 4-methyl-1-pentene-based polymer (B-1), and 20 parts by mass of thermoplastic elastomer (C-1-1), was prepared, and physical properties were evaluated as described above. The results are shown in Table 2.

[Example 4]

Pellets and various test specimens were fabricated employing the same method as in Example 1 except that a resin composition containing 70 parts by mass of 4-methyl-1-pentene-based polymer (A-1), 10 parts by mass of 4-methyl-1-pentene-based polymer (B-2), and 20 parts by mass of thermoplastic elastomer (C-1-1), was prepared, and physical properties were evaluated as described above. The results are shown in Table 2.

[Example 5]

Pellets and various test specimens were fabricated employing the same method as in Example 1 except that a resin composition containing 60 parts by mass of 4-methyl-1-pentene-based polymer (A-1), 20 parts by mass of 4-methyl-1-pentene-based polymer (B-2), and 20 parts by mass of thermoplastic elastomer (C-1-1), was prepared, and physical properties were evaluated as described above. The results are shown in Table 2.

[Example 6]

Pellets and various test specimens were fabricated employing the same method as in Example 1 except that a resin composition containing 60 parts by mass of 4-methyl-1-pentene-based polymer (A-2), 20 parts by mass of 4-methyl-1-pentene-based polymer (B-1), and 20 parts by mass of thermoplastic elastomer (C-1-1), was prepared, and physical properties were evaluated as described above. The results are shown in Table 2.

[Example 7]

Pellets and various test specimens were fabricated employing the same method as in Example 1 except that a resin composition containing 60 parts by mass of 4-methyl-1-pentene-based polymer (A-2), 20 parts by mass of 4-methyl-1-pentene-based polymer (B-2), and 20 parts by mass of thermoplastic elastomer (C-1-1), was prepared, and physical properties were evaluated as described above. The results are shown in Table 2.

[Example 8]

Pellets and various test specimens were fabricated employing the same method as in Example 1 except that a resin composition containing 60 parts by mass of 4-methyl-1-pentene-based polymer (A-1), 20 parts by mass of 4-methyl-1-pentene-based polymer (B-1), and 20 parts by mass of thermoplastic elastomer (C-1-2), was prepared, and physical properties were evaluated as described above. The results are shown in Table 2.

[Example 9]

Pellets and various test specimens were fabricated employing the same method as in Example 1 except that a resin composition containing 80 parts by mass of 4-methyl-1-pentene-based polymer (A-1), 10 parts by mass of 4-methyl-1-pentene-based polymer (B-1), and 10 parts by mass of thermoplastic elastomer (C-2-1), was prepared, and physical properties were evaluated as described above. The results are shown in Table 2.

[Comparative Example 1]

Pellets and various test specimens were fabricated employing the same method as in Example 1 except that a resin composition containing 100 parts by mass of 4-methyl-1-pentene-based polymer (A-1) was prepared, and physical properties were evaluated as described above. The results are shown in Table 2.

[Comparative Example 2]

Pellets and various test specimens were fabricated employing the same method as in Example 1 except that a resin composition containing 80 parts by mass of 4-methyl-1-pentene-based polymer (A-1) and 20 parts by mass of 4-methyl-1-pentene-based polymer (B-1), was prepared, and physical properties were evaluated as described above. The results are shown in Table 2.

[Comparative Example 3]

Pellets and various test specimens were fabricated employing the same method as in Example 1 except that a resin composition containing 80 parts by mass of 4-methyl-1-pentene-based polymer (A-1) and 20 parts by mass of thermoplastic elastomer (C-1-1), was prepared, and physical properties were evaluated as described above. The results are shown in Table 2.

[Comparative Example 4]

Pellets and various test specimens were fabricated employing the same method as in Example 1 except that a resin composition containing 60 parts by mass of 4-methyl-1-pentene-based polymer (A-1) and 40 parts by mass of thermoplastic elastomer (C-1-2), was prepared, and physical properties were evaluated as described above. The results are shown in Table 2.

[Comparative Example 5]

Pellets and various test specimens were fabricated employing the same method as in Example 1 except that a resin composition containing 25 parts by mass of 4-methyl-1-pentene-based polymer (A-1) and 75 parts by mass of 4-methyl-1-pentene-based polymer (B-1), was prepared, and physical properties were evaluated as described above. The results are shown in Table 2.

[Table 2]

| | | | | Example 1 | Example 2 | Example 3 | Example 4 | Example 5 | Example 6 | Example 7 | Example 8 |
|---|---|---|---|---|---|---|---|---|---|---|---|
| Formulation | 4-Methyl-1-pentene-based polymer (A) | (A-1) | % by mass | 80 | 70 | 60 | 70 | 60 | - | - | 60 |
| | | (A-2) | | - | - | - | - | - | 60 | 60 | - |
| | 4-Methyl-1-pentene-based polymer (B) | (B-1) | % by mass | 10 | 20 | 20 | - | - | 20 | - | 20 |
| | | (B-2) | | - | - | - | 10 | 20 | - | 20 | - |

| | | | | | | | | | | |
|---|---|---|---|---|---|---|---|---|---|---|
| Thermoplastic elastomer (C) | (C-1-1) | % by mass | 10 | 10 | 20 | 20 | 20 | 20 | 20 | - |
| | (C-1-2) | % by mass | - | - | - | - | - | - | - | 20 |
| | (C-2-1) | % by mass | - | - | - | - | - | - | - | - |
| Physical properties of molded body | Tensile strength at break | MPa | 15 | 14 | 12 | 13 | 0 | 14 | 16 | 12 |
| | Tensile elongation at break | % | 92 | 100 | 100 | 150 | 65 | 155 | 191 | 210 |
| | Flexural modulus | MPa | 675 | 580 | 410 | 505 | 503 | 897 | 1089 | 420 |
| | Izod impact test 23°C | J/m | 208 | 168 | 810 | 508 | 494 | 326 | 168 | 712 |
| | -15°C | J/m | 31 | 29 | 32 | 30 | 38 | 33 | 46 | 34 |
| | Tanδ peak temperature | °C | 30.9 | 31.3 | 31.9 | 35.6 | 35.8 | 30.8 | 35.9 | 31.7 |
| | Tanδ peak value | - | 0.18 | 0.27 | 0,27 | 0.17 | 0.29 | 0.28 | 0.23 | 0.26 |
| Processability | Mold releasability | mN/m | 24.1 | 24.3 | 25.2 | 24.5 | 24.4 | 25.1 | 25.1 | 25.3 |
| | Rate of dimensional change | % | 1.9 | 2.1 | 2.1 | 2.2 | 2.2 | 2.2 | 2.2 | 2.3 |
| | Pullability | | A | A | B | A | A | A | A | B |

[Table 2] (continued)

| | | | | | Example 9 | Comparative Example 1 | Comparative Example 2 | Comparative Example 3 | Comparative Example 4 | Comparative Example 5 |
|---|---|---|---|---|---|---|---|---|---|---|
| Formulation | 4-Methyl-1-pentene-based polymer (A) | (A-1) | % by mass | | 80 | 100 | 80 | 80 | 60 | 25 |
| | | (A-2) | | | - | - | - | - | - | - |
| | 4-Methyl-1-pentene-based polymer (B) | (B-1) | % by mass | | 10 | - | 20 | - | - | 75 |
| | | (B-2) | | | - | - | - | - | - | - |
| | Thermoplastic elastomer (C) | (C-1-1) | % by mass | | - | - | - | 20 | - | - |
| | | (C-1-2) | % by mass | | - | - | - | - | 40 | - |
| | | (C-2-1) | % by mass | | 10 | - | - | - | - | - |
| Physical properties of molded body | Tensile strength at break | MPa | | | 17 | 18 | 16 | 12 | 8 | 20 |
| | Tensile elongation at break | % | | | 100 | 90 | 237 | 80 | 151 | 188 |
| | Flexural modulus | MPa | | | 690 | 840 | 594 | 617 | 333 | 368 |
| | Izod impact test 23°C | J/m | | | 120 | 63 | 53 | 623 | 147 | 31 |
| | -15°C | J/m | | | 37 | 5 | 4 | 27 | 36 | 3 |
| | Tanδ peak temperature | °C | | | 31.1 | 30.6 | 31.2 | 28.7 | 27.9 | 30.1 |
| | Tanδ peak value | - | | | 0.19 | 0.18 | 0.30 | 0.14 | 0.09 | 1.23 |
| Processability | Mold releasability | mN/m | | | 24.1 | 24.1 | 24.1 | 26.4 | 25.9 | 24.1 |
| | Rate of dimensional change | % | | | 2.1 | 2.5 | 2.4 | 4.6 | 5.6 | 5.6 |
| | Pullability | | | | A | A | B | B | C | C |

In Table 2, the symbol "-" means that the corresponding component is not included.

It is found that the molded body composed of the 4-methyl-1-pentene copolymer composition (X) according to the present invention can retain its shape at elevated temperature, and the obtained molded body has excellent toughness at low temperature. Furthermore, the molded body composed of the 4-methyl-1-pentene copolymer composition (X) according to the present invention has improved flexibility and toughness at low temperature while maintaining the heat resistance that the 4-methyl-1-pentene-based polymer (A) possesses, and can exhibit sufficient mold releasability without deformation, for example, even when the mandrel is pulled out at high speed from a rubber hose produced with the mandrel.

**Claims**

1. A 4-methyl-1-pentene copolymer composition (X), comprising

   50 to 90 parts by mass of a 4-methyl-1-pentene-based polymer (A) having a melting point in a range of 200 to 250°C as measured by differential scanning calorimetry (DSC),
   5 to 30 parts by mass of a 4-methyl-1-pentene-based polymer (B) having a melting point of lower than 200°C or having no melting point observed as measured by differential scanning calorimetry (DSC), and
   5 to 30 parts by mass of a thermoplastic elastomer (C) other than the 4-methyl-1-pentene-based polymer (A) and the 4-methyl-1-pentene-based polymer (B), wherein a total amount of (A), (B), and (C) is 100 parts by mass, and satisfying the following requirements (a) and (b);
   requirement (a): a temperature at which a value of loss tangent tan $\delta$ determined by dynamic viscoelasticity measurement at a frequency of 10 rad/s (1.6 Hz) in a temperature range of 0 to 240°C is maximum, is 0 to 60°C; and
   requirement (b): a maximum value of loss tangent tan $\delta$ determined by dynamic viscoelasticity measurement at a frequency of 10 rad/s (1.6 Hz) in a temperature range of 0 to 100°C is 0.15 to 0.8.

2. The 4-methyl-1-pentene copolymer composition (X) according to claim 1, wherein the 4-methyl-1-pentene-based polymer (A) satisfies the following requirements (c) and (d), and the 4-methyl-1-pentene-based polymer (B) satisfies the following requirements (f) and (g);

   requirement (c): a constituent unit derived from 4-methyl-1-pentene is in a range of 100 to 90 mol%, and a constituent unit derived from at least one selected from the group consisting of ethylene and an $\alpha$-olefin having 10 to 20 carbon atoms is in a range of 0 to 10 mol%, provided that a total amount of the constituent unit derived from 4-methyl-1-pentene and the constituent units derived from ethylene and an $\alpha$-olefin having 10 to 20 carbon atoms is 100 mol%;
   requirement (d): a density is in a range of 820 to 850 kg/m$^3$;
   requirement (f): the 4-methyl-1-pentene-based polymer (B) is composed of 55 to 97 mol% of a constituent unit (i) derived from 4-methyl-1-pentene and 3 to 45 mol% of a constituent unit (ii) derived from at least one selected from ethylene and an $\alpha$-olefin having 3 to 20 carbon atoms excluding 4-methyl-1-pentene, provided that a sum of the constituent unit (i) and the constituent unit (ii) is 100 mol%; and
   requirement (g): the tan $\delta$ peak temperature determined by dynamic viscoelasticity measurement at a frequency of 10 rad/s (1.6 Hz) in a temperature range of -40 to 150°C is 15°C to 45°C; and requirement (h): a density is in a range of 830 to 870 kg/m$^3$.

3. The 4-methyl-1-pentene copolymer composition (X) according to claim 1, wherein the thermoplastic elastomer (C) is an olefinic elastomer (C-1) or a styrenic elastomer (C-2).

4. A molded body formed of the 4-methyl-1-pentene copolymer composition (X) according to claim 1.

5. A mandrel formed of the 4-methyl-1-pentene copolymer composition (X) according to any one of claims 1 to 4.

6. A method for producing a rubber hose, comprising:

   a step of extruding the 4-methyl-1-pentene copolymer composition (X) according to any one of claims 1 to 4 to obtain a mandrel; and
   a step of producing a rubber hose using the mandrel obtained in the step.

## INTERNATIONAL SEARCH REPORT

| International application No. |
|---|
| **PCT/JP2022/039876** |

### A. CLASSIFICATION OF SUBJECT MATTER

**C08L 23/20**(2006.01)i; **C08J 5/00**(2006.01)i; **F16L 11/04**(2006.01)i
FI:    C08L23/20; F16L11/04; C08J5/00 CES

According to International Patent Classification (IPC) or to both national classification and IPC

### B. FIELDS SEARCHED

Minimum documentation searched (classification system followed by classification symbols)

C08L23/20; C08J5/00; F16L11/04

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2013/099876 A1 (MITSUI CHEMICALS, INC.) 04 July 2013 (2013-07-04) claims 1-6, 9-11, paragraphs [0300]-[0312], [0362]-[0462], examples 7, 15-16 | 1-4 |
| Y | | 5-6 |
| Y | JP 62-214920 A (MITSUI PETROCHEM IND LTD) 21 September 1987 (1987-09-21) claim 1 | 5-6 |
| A | WO 2018/155179 A1 (MITSUI CHEMICALS, INC.) 30 August 2018 (2018-08-30) claim 1, paragraphs [0088]-[0130], X1-4, 7-8 | 1-6 |
| A | JP 2020-105446 A (MITSUI CHEMICALS, INC.) 09 July 2020 (2020-07-09) claim 1, paragraphs [0092]-[0118] | 1-6 |
| A | JP 08-041725 A (TORAY MONOFILAMENT CO LTD) 13 February 1996 (1996-02-13) claim 1, paragraphs [0028]-[0048] | 1-6 |

☐ Further documents are listed in the continuation of Box C.    ☑ See patent family annex.

| | |
|---|---|
| *    Special categories of cited documents: | "T"  later document published after the international filing date or priority date and not in conflict with the application but cited to understand the principle or theory underlying the invention |
| "A"  document defining the general state of the art which is not considered to be of particular relevance | |
| "E"  earlier application or patent but published on or after the international filing date | "X"  document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"  document member of the same patent family |

| Date of the actual completion of the international search | Date of mailing of the international search report |
|---|---|
| **10 January 2023** | **17 January 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2022/039876**

| Patent document cited in search report | | | Publication date (day/month/year) | Patent family member(s) | Publication date (day/month/year) |
|---|---|---|---|---|---|
| WO | 2013/099876 | A1 | 04 July 2013 | US 2014/0342111 A1 claims 1-6, 9-11, 14-16, paragraphs [0376]-[0389], [0457]-[0596], examples 7, 15-16 EP 2799488 A1 CN 103987779 A KR 10-2014-0101430 A | |
| JP | 62-214920 | A | 21 September 1987 | (Family: none) | |
| WO | 2018/155179 | A1 | 30 August 2018 | US 2019/0382573 A1 claim 1, paragraphs [0118]-[0165], X1-4, 7-8 EP 3587488 A1 KR 10-2019-0109523 A CN 110325580 A | |
| JP | 2020-105446 | A | 09 July 2020 | (Family: none) | |
| JP | 08-041725 | A | 13 February 1996 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5533519 B
- JP 2006274119 A
- JP H11269330 A
- JP 2013249387 A
- JP 2010235800 A
- JP 2002138173 A
- JP 5769821 B

- WO 0153369 A
- WO 0127124 A
- JP H3193796 A
- JP H241303 A
- WO 2011055803 A
- WO 2014050817 A
- WO 2006054613 A